# EUROPÄISCHE PATENTANMELDUNG

(11) **EP 4 553 457 A2**
(43) Veröffentlichungstag der Anmeldung: **14.05.2025**
(21) Anmeldenummer: 24202656.5
(22) Anmeldetag: 25.09.2024
(51) Int. Cl.: G01F 1/58, G01F 1/60, G01F 25/10

(54) **VERFAHREN ZUR BESTIMMUNG EINES DEFEKTES IN EINEM MESSKREIS EINES MAGNETISCH-INDUKTIVEN DURCHFLUSSMESSGERÄTS**

(30) Priorität: 09.11.2023 DE 102023131031
(71) Anmelder: Krohne AG, 4019 Basel (CH)
(72) Erfinder: Bos, Maarten, 3331 Zwijndrecht (NL)
(74) Vertreter: Gesthuysen Patentanwälte

(57) **Zusammenfassung**

Beschrieben und dargestellt ist ein Verfahren (1) zur Bestimmung eines Defektes in einem Messkreis (2) eines magnetisch-induktiven Durchflussmessgeräts (3), wobei das magnetisch-induktive Durchflussmessgerät (3) ein Messrohr (4) zum Führen eines elektrisch leitfähigen Mediums (5), einen Anregungskreis (6) umfassend eine Anregungsspannungsquelle (7) und eine Magnetfeldeinrichtung (8) zur Erzeugung eines das Messrohr (4) zumindest teilweise senkrecht zur Strömungsrichtung des Mediums (5) durchsetzenden Magnetfeldes, und den Messkreis (2) umfassend zwei Messelektroden (9a, 9b) und einem Spannungsmesser (10) zum Erfassen einer in dem Medium (5) induzierten Messspannung (Um) aufweist.

Eine einfache Detektion von Defekten im Messkreis (2) wird dadurch realisiert, dass in einem Trennschritt in dem Anregungskreis (6) die Anregungsspannungsquelle (7) zumindest teilweise mit einem Schaltmittel (11) von der Magnetfeldeinrichtung (8) getrennt wird, sodass die Magnetfeldeinrichtung (8) stromfrei ist und kein Magnetfeld erzeugt,
dass nach dem Trennschritt mit dem Spannungsmesser (10) des Messkreises (2) eine Messspannung (Udm) erfasst wird und in dem Fall, dass die Messspannung (Udm) den Wert einer vorgegebenen Defektspannung (Ud) überschreitet, ein Defekt in dem Messkreis (2) signalisiert wird.

## Beschreibung

Die Erfindung betrifft ein Verfahren zur Bestimmung eines Defektes in einem Messkreis eines magnetisch-induktiven Durchflussmessgeräts, wobei das magnetisch-induktive Durchflussmessgerät ein Messrohr zum Führen eines elektrisch leitfähigen Mediums, einen Anregungskreis umfassend eine Anregungsspannungsquelle und eine Magnetfeldeinrichtung zur Erzeugung eines das Messrohr zumindest teilweise senkrecht zur Strömungsrichtung des Mediums durchsetzenden Magnetfeldes, und den Messkreis umfassend zwei Messelektroden und einem Spannungsmesser zum Erfassen einer in dem Medium induzierten Messspannung aufweist. Darüber hinaus betrifft die Erfindung auch ein magnetisch-induktives Durchflussmessgerät mit einem Messrohr zum Führen eines elektrisch leitfähigen Mediums, mit einem Anregungskreis umfassend eine Anregungsspannungsquelle, ein Schaltmittel und eine Magnetfeldeinrichtung zur Erzeugung eines das Messrohr zumindest teilweise senkrecht zur Strömungsrichtung des Mediums durchsetzenden Magnetfeldes, mit einem Messkreis umfassend zwei Messelektroden und einen Spannungsmesser zum Erfassen einer in dem Medium induzierten Messspannung, und mit einer Steuer- und Auswerteeinheit zum Betreiben des Anregungskreises und des Messkreises.

Magnetisch-induktive Durchflussmessgeräte sind seit vielen Jahren im industriellen Einsatz. Das Messprinzip beruht auf der Kraftwirkung eines Magnetfeldes auf Ladungen in dem fließenden, leitfähigen Medium, wobei die Bewegungsrichtung der Ladungsträger eine orthogonale Bewegungskomponente zu der Orientierung des Magnetfeldes haben muss (Lorentzkraft). Aufgrund der durch die Kraftwirkung auf bewegte Ladungsträger bewirkten Ladungstrennung wird in dem elektrisch leitfähigen Medium eine Spannung induziert, wobei die Höhe der Spannung proportional zu der Strömungsgeschwindigkeit des Mediums im Messrohrquerschnitt ist.

Die induzierten Messspannungen sind klein, sie bewegen sich typischerweise im Bereich von Mikrovolt bis Millivolt, entsprechender Aufwand muss betrieben werden, um den Messaufbau robust gegen Störungen zu machen. Um Einstreuungen durch elektromagnetische Felder zu verhindern, werden die Leitungen im Messkreis üblicherweise abgeschirmt. Störungen können aber auch entstehen durch Veränderungen der elektrischen Eigenschaften des Messkreises, beispielsweise wenn sich Impedanzen im Messkreis im Laufe der Zeit verändern. Zum Beispiel können sich Impedanzen der Messelektroden verändern durch Ablagerungen, Abnutzungen usw. Beide der nur beispielhaft genannten Störungen beeinflussen die Qualität des Messergebnisses negativ.

Aufgabe der vorliegenden Erfindung ist es daher, Defekte im Messkreis des magnetisch-induktiven Durchflussmessgeräts möglichst einfach zu detektieren.

Die zuvor hergeleitete Aufgabe ist bei dem eingangs beschriebenen Verfahren zur Bestimmung eines Defektes in einem Messkreis eines magnetisch-induktiven Durchflussmessgerät gelöst mit den Merkmalen des Kennzeichnungsteils des ersten unabhängigen Anspruchs, nämlich dadurch, dass zur Detektion des Defektes in dem Messkreis in einem Trennschritt die Anregungsspannungsquelle des Anregungskreises mit einem Schaltmittel zumindest teilweise von der Magnetfeldeinrichtung getrennt wird, sodass die Magnetfeldeinrichtung stromfrei ist und kein Magnetfeld erzeugt. Nach dem Trennschritt, also bei noch vorhandener Trennung von Anregungsspannungsquelle und Magnetfeldeinrichtung, wird mit dem Spannungsmesser des Messkreises eine Messspannung erfasst. In dem Fall, dass die Messspannung den Wert einer vorgegebenen Defektspannung überschreitet, wird ein Defekt in dem Messkreis signalisiert. Bei vielen magnetisch-induktiven Durchflussmessgeräten ist die Anregungsspannungsquelle Teil einer Stromquelle, die die Magnetffeldeinrichtung bestromt. Auch in diesem Fall wird mit dem Schaltmittel die Anregungsspannungsquelle von der Magnetfeldeinrichtung getrennt.

Bei der Messspannung kann es sich um einen Spannungs-Rohmesswert oder um einen aus einem oder mehreren Spannungs-Rohmesswerten abgeleiteten Spannungswert handeln, beispielsweise ein Mittelwert aus mehereren Spannungs-Rohmesswerten oder ein Spannungswert, der durch anderweitige Filterung aus Spannungs-Rohmesswerten erhalten worden ist.

Erfindungsgemäß ist erkannt worden, dass sich bestimmte Defekte in dem Messkreis des magnetisch-induktiven Durchflussmessgeräts auf die Messspannung auswirken, die mit dem Spannungsmesser im Messkreis erfasst wird. Um Spannungsanteile in der Messspannung detektieren zu können, die auf einen Defekt im Messkreis hinweisen, werden Einflüsse des Anregungskeises weitestgehend reduziert, die im normalen Messbetrieb des magnetisch-induktiven Durchflussmessgeräts prinzipbedingt erzeugt werden. Daher wird die Magnetfeldeinrichtung stromfrei geschaltet, sodass durch die Magnetfeldeinrichtung kein Magnetfeld erzeugt wird. Es entfallen daher durch das Messprinzip bewirkte Induktionsspannungen im Medium. Das Medium kann während des Testbetriebes, bei dem also die Magnetfeldeinrichtung stromfrei geschaltet ist, ganz normal in dem Messrohr weiterfließen.

Bei manchen Defekten des Messkreis, bewirken bestimmte Arten von elektrischen Einflüssen eine Messspannung ungleich null; die Messspannung kann von dem Spannungsmesser im Messkreis erfasst werden, der im normalen Messbetrieb die im Medium induzierte Spannung misst, vorzugsweise wird diese Lösung gewählt. Wenn die Messspannung im Testbetrieb, also bei stromfreier Magnefeldeinrichtung, ungleich null ist und den Wert einer vorgegebenen Defektspannung überschreitet, dann wird dies als Hinweis auf einen Defekt gewertet und insoweit wird dieser detektierte Defekt signalisiert, beispielsweise indem in einem Mikrocontroller des Durchflussmessgeräts ein Flag gesetzt wird, eine entsprechende Meldung auf einer Anzeige des Durchflussmessgeräts angezeigt wird oder über eine Kommunikationsschnittstelle des Durchflussmessgeräts eine entsprechende Nachricht abgesetzt wird.

Bei einer bevorzugten Ausgestaltung des Verfahrens ist vorgesehen, dass in dem Trennschritt die Magnetfeldeinrichtung mit dem Schaltmittel potentialfrei geschaltet wird, also die Anschlüsse der Magnetfeldeinrichtung mit dem Schaltmittel von den Anschlüssen der Anregungsspannungsquelle getrennt werden. Mit anderen Worten, die Magnetfeldeinrichtung ist floatend geschaltet. Die Magnetfeldeinrichtung, die häufig eine zweiteilige Spulenanordnung mit Spulen an diametral gegenüberliegenden Stellen am Umfang des Messrohrs ist, trägt also kein elektrisches Potential und ist insoweit auch nicht Ausgangspunkt eines elektrischen Feldes. Im fehlerfreien Zustand ist die im Messkreis von dem Spannungsmesser in diesem Zustand noch messbare Spannung praktisch Null. In dem Messkreis fließende Ruheströme verursachen jedoch dann eine erhöhte Messspannung, wenn sich eine Impedanz im Messkreis erhöht hat, häufig ist dies eine Elektrodenimpedanz. Deshalb ist bei einer Weiterbildung des Verfahrens vorgesehen, dass in dem Fall, dass die Messspannung den Wert der vorgegebenen Defektspannung überschreitet, als Defekt in dem Messkreis ein Fehler erster Art signalisiert wird, insbesondere eine erhöhte Elektrodenimpedanz signalisiert wird.

Eine Alternative Weiterbildung des Verfahrens zeichnet sich dadurch aus, dass in dem Trennschritt ein Anschluss der Anregungsspannungsquelle verbunden bleibt mit einem Anschluss der Magnetfeldeinrichtung, sodass die Magnetfeldeinrichtung auf dem elektrischen Potential eines Anschlusses der Anregungsspannungsquelle liegt. Die Magnetfeldeinrichtung ist auch in diesem Fall stromfrei, sie erzeugt also kein magnetisches Feld, jedoch liegt sie auf einem definierten elektrischen Potential und stellt insoweit eine Potentialvorgabe in der Nähe des Messkreises dar. Der Messkreis ist aufgrund der hohem Messempfindlichkeit so ausgelegt, dass er unempfindlich gegenüber elektrischen Potentialen in seiner Umgebung ist. Wenn sich die Potentialvorgabe hinsichtlich der Magnetfeldeinrichtung so auf den Messkreis auswirkt, dass eine Messspannung resultiert, deren Wert über dem Wert einer vorgegebenen Defektspannung ist, dann ist das ein Hinweis auf einen Defekt im Messkreis bzw. einer angewendeten Schutzmethode.

Häufig ist die Anregungsspannungsquelle im Anregungskreis eine Gleichspannungsquelle. In diesem Fall zeichnet sich eine bevorzugte Variante des Verfahrens dadurch aus, dass die Magnetfeldeinrichtung mit dem Anschluss der Anregungsspannungsquelle verbunden bleibt, der das höhere elektrische Potential aufweist. Häufig besteht ein Schutz des Messkreises gegen Störungen darin, dass der Messkreis elektromagnetisch abgeschirmt wird, insbesondere die Messleitungen des Messkreises abgeschirmt werden, beispielsweise durch verwendung von Koaxialleitungen, deren Ummantelung mit der Masse der Elektronik des magnetisch-induktiven Durchflussmessgeräts verbunden wird. Wenn in diesem Fall die Magnetfeldeinrichtung auf ein anderes Potential gelegt wird und nicht ausgerechnet auf das Massepotential, ist der Einfluss der Magnetfeldeinrichtung auf den Messkreis natürlich größer. In diesem Zusammenhang ist eine vorteilhafte Ausgestaltung des Verfahrens dadurch gekennzeichnet, dass wenn die Messspannung den Wert der vorgegebenen Defektspannung überschreitet, als Defekt des Messkreises ein Fehler zweiter Art signalisiert wird, insbesondere eine defekte Schirmung signalisiert wird.

Bei einer weiteren vorteilhaften Ausgestaltung des Verfahrens wird ein Fehler zweiter Art nur dann signalisiert, wenn ein Fehler erster Art zuvor ausgeschlossen worden ist.

Eine weitere vorteilhafte Ausgestaltung des Verfahrens ist dadurch gekennzeichnet, dass mit dem Spannungsmesser des Messkreises als Messspannung die Spannung zwischen einer Messelektrode und der elektrischen Masse des Messkreises bestimmt wird, insbesondere mit dem Spannungsmesser des Messkreises als Messspannungen die Spannung zwischen einer ersten Messelektrode und der elektrischen Masse des Messkreises und die Spannung zwischen einer zweiten Messelektrode und der elektrischen Masse des Messkreises bestimmt wird, wobei besonders bevorzugt im Falle der Erkennung eines Defektes im Messkreis auch signalisiert wird, in Zusammenhang mit welcher der beiden Messelektroden der Defekt erkannt worden ist.

Bei einer alternativen Ausgestaltung des Verfahrens wird mit dem Spannungsmesser des Messkreises als Messspannung die Spannung zwischen den beiden Messelektrode bestimmt.

Die hergeleitete Aufgabe wird bei dem Eingangs beschriebenen magnetisch-induktiven Durchflussmessgerät dadurch gelöst, dass die Steuer- und Auswerteeinheit so ausgestaltet ist, dass das magnetisch-induktive Durchflussmessgerät in einem Testbetrieb das zuvor erläuterte Verfahren oder eine bevorzugte Ausgestaltung davon ausführt.

Bei magnetisch-induktiven Durchflussmessgeräten ist die Anregungsspannungsquelle oft eine Gleichspannungsquelle (auch als Bestandteil einer Stromquelle), die mittels einer H-Brückenschaltung mit wechselnder Polarität auf die Magnetfeldeinrichtung geschaltet wird, um ein Magnetfeld mit ebenfalls wechselnder Richtung zu erzeugen. Bei einer bevorzugten Ausgestaltung des magnetisch-induktiven Durchflussmessgeräts ist deshalb vorgesehen, dass das im Testbetrieb verwendete Schaltmittel eine H-Brückenschaltung ist, die in einem normalen Messbetrieb des magnetisch-induktiven Durchflussmessgerätes dazu dient, Anschlüsse der Anregungsspannungsquelle mit Anschlüssen der Magnetfeldeinrichtung wechselweise zu verbinden, um die Magnetfeldeinrichtung in wechselnder Richtung zu bestromen. Dadurch wird ein schon vorhandenes Schaltmittel eingesetzt und es müssen keine zusätzlichen schaltungstechnischen Mittel eingesetzt werden, um das beschriebene Verfahren in dem Durchflussmessgerät zu realisieren.

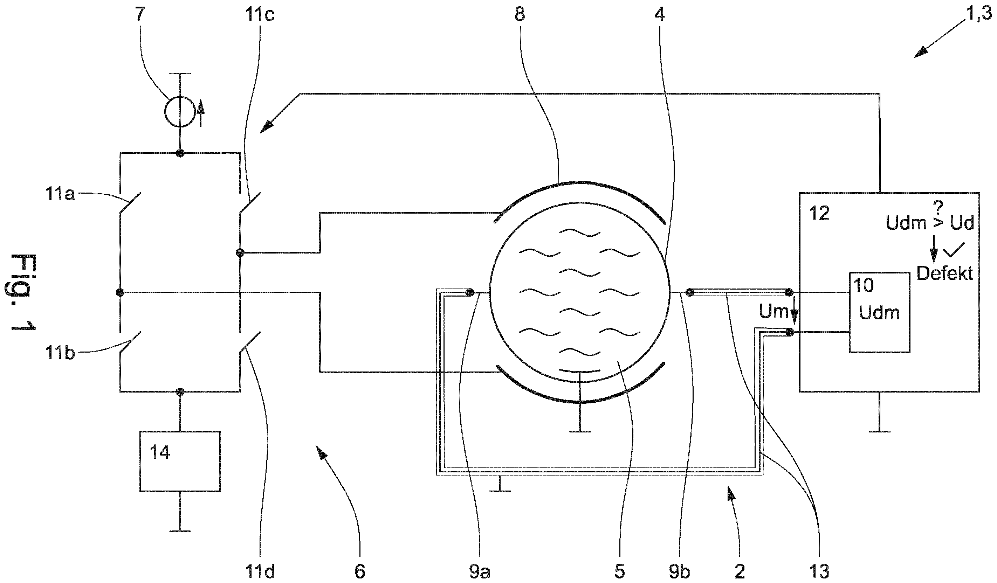

Im Einzelnen gibt es nun eine Vielzahl von Möglichkeiten, das erfindungsgemäße Verfahren und das erfindungsgemäße magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigt
- Fig. 1: schematisch ein Verfahren zur Bestimmung eines Defekts in einem Messkreis eines magnetisch-induktiven Durchflussmessgeräts und ein entsprechendes magnetisch-induktives Durchflussmessgerät, das dieses Verfahren ausführt.

In der Figur ist schematisch ein Verfahren 1 zur Bestimmung eines Defektes in einem Messkreis 2 eines magnetisch-induktiven Durchflussmessgeräts 3 und auch ein solches magnetisch-induktives Durchflussmessgerät 3 gezeigt.

Das magnetisch-induktive Durchflussmessgerät 3 weist ein Messrohr 4 zum Führen eines elektrisch leitfähigen Mediums 5, einen Anregungskreis 6 umfassend eine Anregungsspannungsquelle 7 und eine Magnetfeldeinrichtung 8 zur Erzeugung eines das Messrohr 4 zumindest teilweise senkrecht zur Strömungsrichtung des Mediums 5 durchsetzenden Magnetfeldes auf. Ferner umfasst der Messkreis 2 des magnetisch-induktiven Durchflussmessgeräts 3 zwei Messelektroden 9a, 9b und einem Spannungsmesser 10 zum Erfassen einer in dem Medium 5 induzierten Messspannung Um, also im normalen Messbetrieb. In den Anregungskreis 6 ist ferner ein Stromregler 14 integriert, der zusammen mit der Anregungsspannungsquelle 7 eine Stromquelle realisiert.

Da die induzierte Messspannung Um im Messbetrieb des magnetisch-induktiven Durchflussmessgeräts 3 sehr klein ist, werden verschiedene Maßnahmen ergriffen, um den Messkreis 2 möglichst unempfindlich gegen Störungen zu machen. Eine solche Maßnahme besteht beispielsweise darin, die Messleitungen zwischen den Messelektroden 9a, 9b im Messrohr 4 und der Steuer- und Auswerteeinheit 12 des magnetisch-induktiven Durchflussmessgeräts 3 als geschirmte Messleitungen 13 vorzusehen, also beispielsweise als Koaxial-Leitungen mit geerdetem äußeren Schirm.

Wie eingangs ausgeführt worden ist, hat sich in der Praxis gezeigt, dass verschiedene Defekte des Messkreises 2 eine von null verschiedene elektrische Spannungen im Messkreis 2 verursachen, die als Messspannung Udm von dem Spannungsmesser 10 des Messkreises erfasst werden können, wobei diese von null verschiedene Messspannung sich unabhängig von der messprinzipbedingten induzierten Messspannung bei vorhandenem Magnetfeld ausbildet.

Das hier dargestellte Verfahren 1 macht sich die zuvor geschilderte Erkenntnis zu Nutze, wobei zur Detektion des Defektes in dem Messkreis 2 in einem Trennschritt die Anregungsspannungsquelle 7 in dem Anregungskreis 6 zumindest teilweise mit einem Schaltmittel 11 von der Magnetfeldeinrichtung 8 getrennt wird, sodass die Magnetfeldeinrichtung 8 stromfrei ist und kein Magnetfeld erzeugt. Dadurch wird gewährleistet, dass die sich in dem Messkreis 2 einstellende und messtechnisch erfasste Messspannung Udm keinen messprinzipbedingten Beitrag enthält, die Messspannung Udm also möglichst ausschließlich von Messkreisdefekten verursacht wird.

Nach dem Trennschritt, also bei vollzogener und andauernder Trennung der Anregungsspannungsquelle 7 von der Magnetfeldeinrichtung 8, wird mit dem Spannungsmesser 10 des Messkreises 2 eine Messspannung Udm erfasst. In dem Fall, dass die Messspannung Udm den Wert einer vorgegebenen Defektspannung Ud überschreitet, wird ein Defekt in dem Messkreis 2 signalisiert.

Mit der Durchführung des beschriebenen Verfahrens 1 wird also ein Testbetrieb des magnetisch-induktiven Durchflussmessgeräts 3 realisiert, der sich vom normalen Messbetrieb unterscheidet, da die Magnetfeldeinrichtung 8 gewollt stromfrei geschaltet wird.

Bei dem in der Figur gezeigten Ausführungsbeispiel ist das im Testbetrieb, also bei der Durchführung des Verfahrens 1, verwendete Schaltmittel 11 eine H-Brückenschaltung mit den Halbleiterschaltern 11a, 11b, 11c und 11d. Diese H-Brückenschaltung dient in dem normalen Messbetrieb des magnetisch-induktiven Durchflussmessgerätes 3 dazu, Anschlüsse der Anregungsspannungsquelle 7 mit Anschlüssen der Magnetfeldeinrichtung 8 wechselweise zu verbinden, um die Magnetfeldeinrichtung 8 in wechselnder Richtung zu bestromen. Vorteil dieser Realisierung ist, dass zur Durchführung des Verfahrens 1 keine zusätzlichen Schaltmittel vorzusehen sind, sondern die ohnehin vorhandenen Schaltmittel 11 verwendet werden, was den gerätetechnischen Aufwand reduziert. In der Figur ist durch einen Wirkpfeil angedeutet, dass die Steuer- und Auswerteinheit 12 den Anregungskreis 6 in geeigneter Weise ansteuert, insbesondere auch die Schaltmittel 11, konkret die Halbleiterschalter 11a-11d, betätigt.

Gemäß einer ersten Verfahrensvariante 1 ist vorgesehen, dass in dem Trennschritt die Magnetfeldeinrichtung 8 mit dem Schaltmittel 11 potentialfrei geschaltet wird, also die Anschlüsse der Magnetfeldeinrichtung 8 mit dem Schaltmittel 11 von den Anschlüssen der Anregungsspannungsquelle 7 getrennt werden. In dem gezeigten Ausführungsbeispiel werden dazu alle vier Halbleiterschalter 11a, 11b, 11c und 11d der H-Brückenschaltung geöffnet, so wie das in der Figur auch gezeigt ist; die Magnetfeldeinrichtung 8 floatet also. Dadurch wird nicht nur kein Magnetfeld erzeugt, sondern es werden auch elektrische Felder in der Umgebung des Messkreises 2 vermieden.

In dem Messkreis 2 gleichwohl fließende Ruheströme erzeugen dann elektrische Spannungsen im Messkreis 2. Wenn sich Impedanzen im Messkreis 2 erhöhen, beispielsweise wenn eine Elektrodenkontaktierung Schaden genommen hat oder eine Messelektrode gebrochen ist, erhöhen sich auch die Spannungen im Messkreis 2. Deshalb wird bei dieser Verfahrensvariante 1 in dem Fall, dass die Messspannung Udm den Wert der vorgegebenen Defektspannung Ud überschreitet, als Defekt in dem Messkreis 2 ein Fehler erster Art signalisiert, insbesondere wird der Hinweis auf eine erhöhte Elektrodenimpedanz gegeben. Im vorliegenden Ausführungsbeispiel wird diese Information auf einer hier nicht ausdrücklich dargestellten Anzeige des magnetisch-induktiven Durchflussmessgeräts 3 angezeigt.

Bei einer zweiten Verfahrensvariante 1 bleibt in dem Trennschritt wenigstens ein Anschluss der Anregungsspannungsquelle 7 verbunden mit einem Anschluss der Magnetfeldeinrichtung 8. Diese Verfahrensvariante wird in Fig. 1 realisiert, indem Halbleiterschalter 11c geschlossen wird, während die Halbleiterschalter 11a, 11b und 11d geöffnet sind, sodass die Magnetfeldeinrichtung 8 auf dem elektrischen Potential des Anschlusses der Anregungsspannungsquelle 7 liegt. Genausogut könnte natürlich auch alternativ oder zusätzlich der Halbleiterschalter 11a geschlossen werden. Werden mehrere Anschlüsse der Magnetfeldeinrichtung mit der Anregungsspannungsquelle 7 verbunden, muss es sich natürlich um denselben Anschluss der Anregungsspannungsquelle 7 mit einem einzigen elektrischen Potential handeln, da andernfalls nicht die Forderung nach Stromfreiheit des Anregungskreises 6 bzw. der Magnetfeldeinrichtung 8 erfüllt wäre.

Im dargestellten Ausführungsbeispiel ist die Anregungsspannungsquelle 7 eine Gleichspannungsquelle, und die Magnetfeldeinrichtung 8 ist bei der beschriebenen Schalterstellung (Schalter 11c geschlossen, alle anderen Schalter geöffnet) mit dem Anschluss der Anregungsspannungsquelle 7 verbunden, der das höhere elektrische Potential aufweist. Dadurch bildet sich ein elektrisches Feld in der Umgebung des Messkreises 2 aus, insbesondere auch zwischen der Magnetfeldeinrichtung 8 und den ein niedrigeres elektrisches Potential tragenden Abschirmungen der Koaxialleitungen 13. Es ist einleuchtend, dass sich in dem Messkreis 2 elektrische Spannungen ausbilden, wenn eine Abschirmung der Koaxialleitungen 13 defekt ist. Aus diesem Grund ist die zweite Verfahrensvariante 1 so ausgestaltet, dass in dem Fall, wenn die Messspannung Udm den Wert der vorgegebenen Defektspannung Ud überschreitet, als Defekt in dem Messkreis 2 ein Fehler zweiter Art signalisiert wird, hier eine defekte Schirmung. In der gezeigten Ausführungsform ist die Gleichspannungsquelle 7 darüber hinaus eine geregelte Gleichspannungsquelle, die z. B. so geregelt wird, um die Richtung des Magnetfeldes 8 möglichst schnell zu ändern und um kurze Übergangszeiten zwischen statischen Perioden des Magnetfeldes 8 zu realisieren.

Die Steuer- und Auswerteeinheit 12 ist in dem gezeigten Ausführungsbeispiel so programmiert, dass ein Fehler zweiter Art nur dann signalisiert wird, wenn ein Fehler erster Art zuvor ausgeschlossen worden ist. Es werden also die zuvor erläuterten Verfahrensvarianten nacheinander ausgeführt.

In der Figur ist zu erkennen, dass beide Messelektroden 9a, 9b über die geschirmten Leitungen 13 elektrisch mit dem Spannungsmesser 10 verbunden sind. Das Verfahren 1 ist hier so ausgestaltet, dass mit dem Spannungsmesser 10 des Messkreises 2 als Messspannung Udm die Spannung zwischen einer Messelektrode 9a, 9b und der elektrischen Masse des Messkreises 2 bestimmt wird. Vorliegend werden mit dem Spannungsmesser 10 des Messkreises 2 als Messspannungen Udm die Spannung zwischen der ersten Messelektrode 9a und der elektrischen Masse des Messkreises 2 und die Spannung zwischen der zweiten Messelektrode 9b und der elektrischen Masse des Messkreises 2 bestimmt, wobei im Falle der Erkennung eines Defektes im Messkreis 2 auch signalisiert wird in Zusammenhang mit welcher der beiden Messelektroden 9a, 9b der Defekt erkannt worden ist.

### Bezugszeichen

- 1: Verfahren
- 2: Messkreis
- 3: magnetisch-induktives Durchflussmessgerät
- 4: Messrohr
- 5: Medium
- 6: Anregungskreis
- 7: Anregungsspannungsquelle
- 8: Magnetfeldeinrichtung
- 9, 9a, 9b: Messelektroden
- 10: Spannungsmesser
- 11, 11a-11d: Schaltmittel, Halbleiterschalter
- 12: Steuer- und Auswerteeinheit
- 13: geschirmte Leitungen
- 14: Stromregler

- Um: induzierte Messspannung im Messbetrieb
- Udm: Messspannung im Testbetrieb
- Ud: vorgegebenen Defektspannung

## Patentansprüche

1. Verfahren (1) zur Bestimmung eines Defektes in einem Messkreis (2) eines magnetisch-induktiven Durchflussmessgeräts (3), wobei das magnetisch-induktive Durchflussmessgerät (3) ein Messrohr (4) zum Führen eines elektrisch leitfähigen Mediums (5), einen Anregungskreis (6) umfassend eine Anregungsspannungsquelle (7) und eine Magnetfeldeinrichtung (8) zur Erzeugung eines das Messrohr (4) zumindest teilweise senkrecht zur Strömungsrichtung des Mediums (5) durchsetzenden Magnetfeldes, und den Messkreis (2) umfassend zwei Messelektroden (9a, 9b) und einem Spannungsmesser (10) zum Erfassen einer in dem Medium (5) induzierten Messspannung (Um) aufweist,
**dadurch gekennzeichnet,**
**dass** zur Detektion des Defektes in dem Messkreis (2) in einem Trennschritt in dem Anregungskreis (6) die Anregungsspannungsquelle (7) zumindest teilweise mit einem Schaltmittel (11) von der Magnetfeldeinrichtung (8) getrennt wird, sodass die Magnetfeldeinrichtung (8) stromfrei ist und kein Magnetfeld erzeugt,
**dass** nach dem Trennschritt mit dem Spannungsmesser (10) des Messkreises (2) eine Messspannung (Udm) erfasst wird und in dem Fall, dass die Messspannung (Udm) den Wert einer vorgegebenen Defektspannung (Ud) überschreitet, ein Defekt in dem Messkreis (2) signalisiert wird.

2. Verfahren (1) nach Anspruch 1, **dadurch gekennzeichnet, dass** in dem Trennschritt die Magnetfeldeinrichtung (8) mit dem Schaltmittel (11) potentialfrei geschaltet wird, also die Anschlüsse der Magnetfeldeinrichtung (8) mit dem Schaltmittel (11) von den Anschlüssen der Anregungsspannungsquelle (7) getrennt wird.

3. Verfahren (1) nach Anspruch 2, **dadurch gekennzeichnet, dass** in dem Fall, dass die Messspannung (Udm) den Wert der vorgegebenen Defektspannung (Ud) überschreitet, als Defekt in dem Messkreis (2) ein Fehler erster Art signalisiert wird, insbesondere eine erhöhte Elektrodenimpedanz signalisiert wird.

4. Verfahren (1) nach Anspruch 1, **dadurch gekennzeichnet, dass** in dem Trennschritt ein Anschluss der Anregungsspannungsquelle (7) verbunden bleibt mit einem Anschluss der Magnetfeldeinrichtung (8), sodass die Magnetfeldeinrichtung (8) auf dem elektrischen Potential des Anschlusses der Anregungsspannungsquelle (7) liegt.

5. Verfahren (1) nach Anspruch 4, **dadurch gekennzeichnet, dass** wenn die Anregungsspannungsquelle (7) eine Gleichspannungsquelle ist, die Magnetfeldeinrichtung (8) mit dem Anschluss der Anregungsspannungsquelle (7) verbunden bleibt, der das höhere elektrische Potential aufweist.

6. Verfahren (1) nach Anspruch 4 oder 5, **dadurch gekennzeichnet, dass** in dem Fall, dass die Messspannung (Udm) den Wert der vorgegebenen Defektspannung (Ud) überschreitet, als Defekt in dem Messkreis (2) ein Fehler zweiter Art signalisiert wird, insbesondere eine defekte Schirmung signalisiert wird.

7. Verfahren (1) nach Anspruch 6, **dadurch gekennzeichnet, dass** ein Fehler zweiter Art nur dann signalisiert wird, wenn ein Fehler erster Art zuvor ausgeschlossen worden ist.

8. Verfahren (1) nach einem der Ansprüche 1 bis 7, **dadurch gekennzeichnet, dass** mit dem Spannungsmesser (10) des Messkreises als Messspannung (Udm) die Spannung zwischen einer Messelektrode (9a, 9b) und der elektrischen Masse des Messkreises (2) bestimmt wird, insbesondere mit dem Spannungsmesser (10) des Messkreises (2) als Messspannungen (Udm1, Udm2) die Spannung zwischen der ersten Messelektrode (9a) und der elektrischen Masse des Messkreises (2) und die Spannung zwischen der zweiten Messelektrode (9b) und der elektrischen Masse des Messkreises (2) bestimmt wird, wobei besonders bevorzugt im Falle der Erkennung eines Defektes im Messkreis (2) auch signalisiert wird in Zusammenhang mit welcher der beiden Messelektroden (9a, 9b) der Defekt erkannt worden ist.

9. Magnetisch-induktives Durchflussmessgerät (3) mit einem Messrohr (4) zum Führen eines elektrisch leitfähigen Mediums (5), mit einem Anregungskreis (6) umfassend eine Anregungsspannungsquelle (7), ein Schaltmittel (11) und eine Magnetfeldeinrichtung (8) zur Erzeugung eines das Messrohr (4) zumindest teilweise senkrecht zur Strömungsrichtung des Mediums (5) durchsetzenden Magnetfeldes, mit einem Messkreis (2) umfassend zwei Messelektroden (9a, 9b) und einen Spannungsmesser (10) zum Erfassen einer in dem Medium induzierten Messspannung, und mit einer Steuer- und Auswerteeinheit (12) zum Betreiben des Anregungskreises (6) und des Messkreises (2),
**dadurch gekennzeichnet,**
**dass** die Steuer- und Auswerteeinheit (12) so ausgestaltet ist, dass das magnetisch-induktive Durchflussmessgerät (3) in einem Testbetrieb das Verfahren (1) nach einem der Ansprüche 1 bis 8 durchführt.

10. Magnetisch-induktives Durchflussmessgerät (3) nach Anspruch 9, **dadurch gekennzeichnet, dass** das im Testbetrieb verwendete Schaltmittel (11) eine H-Brückenschaltung ist, die in einem normalen Messbetrieb des magnetisch-induktiven Durchflussmessgerätes dazu dient, Anschlüsse der Anregungsspannungsquelle (7) mit Anschlüssen der Magnetfeldeinrichtung (8) wechselweise zu verbinden, um die Magnetfeldeinrichtung (8) in wechselnder Richtung zu bestromen.
